# FASCICULE DE BREVET EUROPEEN

(11) **EP 0 356 348 B1**
(45) Date de publication et mention de la délivrance du brevet: **29.12.1999**
(21) Numéro de dépôt: 89420297.7
(22) Date de dépôt: 09.08.1989
(51) Int. Cl.: H01G 2/14

(54) **Condensateur basse tension auto-protégé**
Niederspannungskondensator mit Abreisssicherung
Self-protected low-voltage capacitor

(30) Priorité: 19.08.1988 FR 8811198
(43) Date de publication de la demande: 28.02.1990
(73) Titulaire: Schneider Electric Industries SA, 92100 Boulogne Billancourt (FR)
(72) Inventeur: Josserand, Michel, F-38500 Voiron (FR)
(74) Mandataire: Jouvray, Marie-Andrée

(56) Documents cités:
- EP-A- 0 244 281
- DE-A- 2 342 356
- DE-A- 2 928 965
- FR-A- 2 379 894
- FR-A- 2 580 855
- US-A- 3 909 683

## Description

La présente invention concerne les condensateurs de puissance basse tension généralement utilisés pour la correction du facteur de puissance dans la distribution électrique basse tension.

On connaît déjà de tels condensateurs de puissance basse tension constitués d'un ou plusieurs éléments condensateurs, chaque élément comportant un enroulement cylindrique de couches isolantes et de couches conductrices de l'électricité formant une première et une seconde électrode de type auto-cicatrisant isolées l'une de l'autre. En pratique, un élément condensateur est réalisé par l'enroulement de films plastiques métallisés, et le condensateur consiste en un assemblage d'éléments bobinés, connectés selon un arrangement série et/ou parallèle en fonction de la puissance désirée.

Le condensateur est dit auto-cicatrisant lorsque la présence de défauts mineurs dans le film diélectrique entraîne un claquage localisé qui conduit à l'évaporation des électrodes au voisinage du défaut, sans dommages pour le film adjacent. Lors de sollications anormales, notamment de surtensions ou d'élévations de température, un claquage diélectrique peut détériorer les qualités d'auto-cicatrisation du condensateur. L'augmentation résultante du courant qui traverse l'élément provoque une évolution de température au voisinage du défaut et une production de gaz de décomposition du film plastique. L'élément étant généralement disposé dans un boîtier étanche, le boîtier peut éclater sous l'effet de la pression produite par le gaz.

Pour éviter les risques d'explosion, plusieurs solutions ont été proposées dans le passé. Une première solution consiste à placer les éléments dans des boîtiers métalliques étanches imprégnés avec des huiles diélectriques. Sous l'effet des gaz, le boîtier se déforme et provoque l'arrachement de connexions qui relient le condensateur au réseau électrique. Aucun risque d'explosion n'est alors susceptible de se produire car aucun réamorçage n'est possible dans de l'huile. Une telle solution présente toutefois de nombreux inconvénients : elle nécessite d'utiliser de grandes quantités d'huile, ce qui augmente les risques d'incendie ; un seul défaut provoque la mise hors service de l'ensemble du condensateur. D'autre part, l'utilisation de l'huile en tant que diélectrique susceptible d'empêcher les réamorçages électriques s'avère peu adaptée à une solution dans laquelle l'élément de condensateur est noyé dans une résine formant un enrobage complet. Il apparaît en effet difficile de maintenir l'huile en forme et en place avant et pendant formation de l'enrobage en résine. On est donc conduit à préférer les condensateurs dits "secs".

Une seconde solution consiste à introduire chaque élément dans un pot métallique ou plastique individuel, le tout étant enrobé de résine bi-composant. L'augmentation de pression provoque alors une déformation du boîtier, et l'on prévoit un couvercle déformable ou éjectable sous l'effet de la pression, cette déformation ou éjection arrachant un fil de connexion de l'élément pour assurer sa déconnexion électrique (voir FR-A-2 580 855). La protection ainsi obtenue est efficace pour les faibles surintensités, mais elle présente l'inconvénient d'une possibilité de réamorçage quand la déconnexion a lieu avec des courants de court-circuit importants. Un tel réamorçage provoque l'ouverture ou l'explosion du boîtier, avec des risques d'incendie ou tout au moins un fort dégagement de fumées endommageant les équipements voisins.

Le brevet FR-A-2 598024 décrit une troisième solution dans laquelle on introduit chaque élément dans un pot plastique et on utilise la déformation d'une membrane qui provoque la fermeture d'un contact court-circuiteur mettant en court-circuit franc l'élément du condensateur. On provoque alors le fonctionnement d'un appareil de protection disposé en amont dans le circuit électrique, par exemple un disjoncteur ou un fusible, éliminant le court-circuit. Une telle solution nécessite de prévoir des pièces en mouvement relativement nombreuses, ce qui augmente sensiblement le coût de production d'un tel condensateur. D'autre part, la durée de vie d'un tel condensateur se trouve limitée par le fait que la protection mécanique externe des éléments est très faible.

La présente invention a notamment pour objet de permettre la réalisation d'un condensateur de puissance basse tension auto-cicatrisant, équipé d'une protection efficace et peu onéreuse, dans lequel chaque élément est enrobé sous vide dans de fortes épaisseurs de résine. Dans un tel condensateur, l'apparition de claquages localisés d'importance déterminée provoque la coupure du circuit électrique de l'élément tout en évitant les phénomènes de réamorçage.

Dans un tel condensateur, l'élément est mécaniquement bien maintenu dans la résine, ce qui augmente sensiblement la durée de vie du condensateur.

La structure de condensateur selon l'invention permet, lors de la construction, de noyer et surmouler sous vide un élément dans la résine tout en évitant de manière très simple la pénétration de résine dans les zones dans lesquelles elle serait indésirable.

Pour atteindre ces objets ainsi que d'autres, le condensateur selon la présente invention comprend au moins un élément à enroulement cylindrique de couches isolantes et de couches conductrices de l'électricité formant une première et une seconde électrodes de type auto-cicatrisant isolées l'une de l'autre ; la première électrode est connectée électriquement à un premier conducteur d'entrée du condensateur ; la seconde électrode est connectée électriquement à un second conducteur d'entrée du condensateur par l'intermédiaire d'un fil fusible susceptible de fondre et de couper la circulation de courant électrique lorsque le condensateur est traversé par une intensité supérieure à un seuil déterminé ; l'élément de condensateur est inséré dans une enceinte étanche, les conducteurs d'entrée traversant de manière étanche la paroi de l'enceinte ; une membrane déformable divise l'espace intérieur de l'enceinte en deux compartiments, un premier compartiment contenant l'élément à enroulement cylindrique d'électrodes, un second compartiment contenant un gaz tel que l'air, la membrane étant susceptible de se déformer sous l'action de la pression de gaz produits par la décomposition d'une portion de l'élément à enroulement cylindrique en cas de claquages auto-cicatrisants ; la membrane est reliée mécaniquement à une portion de premier conducteur d'entrée pour provoquer le déplacement de ladite portion de conducteur lors de la déformation de la membrane ; une partie cassable de premier conducteur d'entrée est tendue entre un point fixe disposé à l'intérieur du premier compartiment et la portion de premier conducteur reliée mécaniquement à la membrane, de sorte que la déformation de membrane produit une tension de la partie cassable de conducteur d'entrée, ladite partie cassable présentant une résistance mécanique limitée telle qu'elle se rompt sous l'action d'une tension supérieure à un seuil de traction déterminé ; la partie cassable de conducteur d'entrée est noyée dans un diélectrique pâteux évitant le réamorçage électrique après rupture de la partie cassable.

Selon un mode de réalisation particulier, la partie cassable de conducteur d'entrée est constituée d'un fil fusible de diamètre choisi pour présenter la résistance mécanique limitée appropriée, ledit fil fusible présentant la double propriété d'être cassable sous l'action d'une traction par déformation suffisante de membrane, et d'être fusible sous l'action d'un échauffement provoqué par un courant d'intensité suffisante.

Selon un mode de réalisation particulier, le conducteur d'entrée comprend en outre une seconde portion de fil fusible également noyée dans le diélectrique pâteux.

Selon un mode de réalisation avantageux, la membrane déformable est associée à une seconde membrane formant avec elle une capsule étanche remplie d'un gaz tel que l'air ; la capsule étanche forme le second compartiment de l'espace intérieur de l'enceinte enfermant l'élément à enroulement cylindrique ; l'épaisseur de la capsule est choisi suffisante pour autoriser une déformation de membrane déformable telle qu'elle assure la rupture de la partie cassable de conducteur d'entrée. La membrane déformable recouvre de préférence l'une des faces d'extrémité de l'élément à enroulement cylindrique, et une quantité de diélectrique pâteux est disposée dans la zone située entre ladite face d'extrémité de l'élément à enroulement cylindrique et la membrane déformable. On constate que, lors de la fabrication du condensateur, la résine diélectrique formant la paroi de l'enceinte vient mouler étroitement l'élément à enroulement cylindrique sans pénétrer dans la zone occupée par le diélectrique pâteux. Cet effet peut être obtenu notamment en utilisant un diélectrique pâteux constitué d'une graisse au silicone.

Selon un mode de réalisation particulier, on dispose également une pellicule de diélectrique pâteux sur au moins certaines parties de la face extérieure latérale de l'élément à enroulement cylindrique ; lors du surmoulage en résine diélectrique tout autour de l'élément, le diélectrique pâteux forme des zones de cheminement préférentiel des gaz autour de l'élément à enroulement cylindrique , au moins dans certaines portions de la périphérie de l'élément à enroulement cylindrique .

D'autres objets, caractéristiques et avantages de la présente invention ressortiront de la description suivante de modes de réalisation particuliers, faite en relation avec les figures jointes, parmi lesquelles :
- la figure 1 représente une vue schématique en coupe axiale d'un élément de condensateur selon l'invention en position normale de fonctionnement ; et
- la figure 2 est une vue analogue à celle de la figure 1, montrant l'élément lors d'une surpression interne conduisant à l'ouverture du circuit électrique.

Comme le représentent les figures, un élément de condensateur selon la présente invention comprend au moins un élément 1 à enroulement cylindrique de couches isolantes et de couches conductrices de l'électricité formant une première et une seconde électrodes de type auto-cicatrisant isolées l'une de l'autre. La première électrode est connectée électriquement à un premier conducteur d'entrée 2 du condensateur. La seconde électrode est connectée électriquement à un second conducteur d'entrée 3 du condensateur.

L'élément 1 à enroulement cylindrique présente une première face d'extrémité 4, une seconde face d'extrémité 5, une face latérale cylindrique 6, et un canal axial traversant 7.

La première électrode est reliée au premier conducteur 2 par une première soudure 8 disposée en zone périphérique de la première face d'extrémité 4 de l'élément cylindrique 1. La première soudure 8 est connectée électriquement à un fil fusible 9. Le fil fusible 9 comporte une partie radiale 10 suivie d'une partie axiale 11 à laquelle elle est reliée par une portion 160 intermédiaire, l'extrémité de la partie axiale 11 étant solidarisée à un point fixe formé par l'extrémité 12 d'un conducteur axial 13 de forte section traversant le canal 7 et formant le premier conducteur 2.

Une membrane déformable 14 recouvre la première face d'extrémité 4 de l'élément 1 à enroulement cylindrique, sur laquelle elle est appliquée par un rebord périphérique 15. Le rebord périphérique 15 recouvre partiellement la face latérale 6 de l'élément 1 à enroulement cylindrique. La partie centrale de la membrane 14 est solidarisée au fil fusible 9, par une soudure 16, dans la portion de fil fusible 9 séparant la partie radiale 10 et la partie axiale 11 du fil fusible. La partie axiale 11 de fil fusible 9 se trouve tendue entre l'extrémité 12 du conducteur 13 et la soudure 16 de la membrane 14. La soudure 16 est réalisée par exemple sur un rivet métallique solidaire de la membrane 14.

La membrane 14 est solidarisée à sa périphérie à une seconde membrane 17 formant avec elle une capsule étanche et définissant un compartiment 18 enfermant un gaz tel que l'air.

Les membranes 14 et 17 peuvent, par exemple, être réalisées en chlorure de polyvinyle.

Le canal 7 axial, traversé par le conducteur axial 13, comporte un tube isolant 19, et une pièce d'extrémité 20. La pièce d'extrémité 20 comprend un corps tubulaire axial se terminant vers l'intérieur du canal 7 axial par un rétrécissement 21 destiné à retenir l'extrémité 12 du conducteur 13 axial. L'extrémité 12 de ce conducteur est avantageusement formée en boule, comme le représente la figure, ladite boule venant reposer dans le fond du rétrécissement 21. L'autre extrémité de la pièce 20 comporte une collerette 22 venant en appui sur la première face d'extrémité 4 de l'élément 1 à enroulement cylindrique. Une traction axiale du premier conducteur 2 vers le bas dans le sens représenté sur la figure applique la première extrémité 12 dans le fond du rétrécissement 21, et applique la collerette 22 contre la première face d'extrémité 4 de l'élément 1.

Le second conducteur 3 est relié à la seconde électrode par une soudure 23 réalisée sur la deuxième face d'extrémité 5 de l'élément 1.

Le rétrécissement 21 de la pièce d'extrémité 20, et l'extrémité 12 du conducteur axial 13, occupent une position intermédiaire dans le canal 7. De préférence, ces éléments sont disposés à une distance de deux à trois centimètres à partir de la première face d'extrémité 4 de l'élément 1. Il en résulte que la longueur de portion axiale 11 de fil fusible est de deux à trois centimètres.

Un espace relativement réduit est ménagé entre la membrane 14 déformable et la première face d'extrémité 4 de l'élément 1 à enroulement cylindrique. Cet espace est rempli d'un diélectrique pâteux tel qu'une graisse au silicone. On peut, par exemple, utiliser une graisse vendue sous la référence RHODERFIL PATE 4 par la société française RHODERFIL SILICONE. La graisse au silicone remplit également l'espace intérieur de la pièce d'extrémité 20. Il en résulte que la graisse au silicone enrobe la totalité du fil fusible 9, et notamment la partie axiale 11 du fil fusible.

L'ensemble formé par la capsule 14-18 et l'élément 1 à enroulement cylindrique est noyé sous vide dans une résine diélectrique durcissable 24 formant la paroi de l'enceinte et enfermant la totalité de l'élément de condensateur. Ainsi, la résine 24 vient en appui contre la seconde face d'extrémité 5 et contre la face latérale 6 de l'élément 1 à enroulement cylindrique, et contre la seconde membrane 17 de la capsule 14-18. La présence du diélectrique pâteux 25 empêche la pénétration de résine 24 dans la zone située entre la membrane 24 et l'élément 1 à enroulement cylindrique.

La résine 24 peut, par exemple, être une résine polyuréthanne chargée.

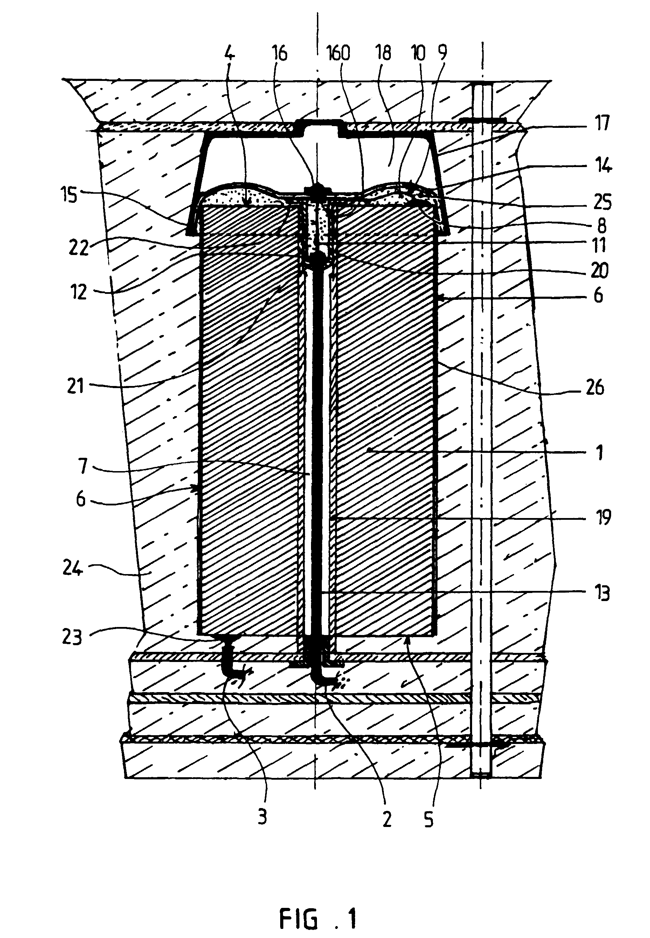

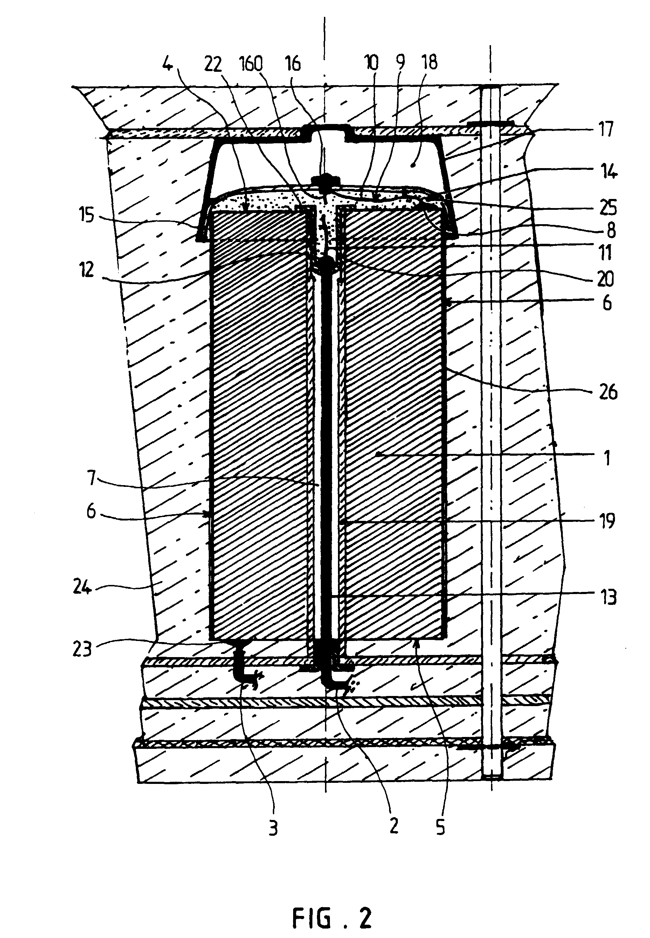

Le fonctionnement du dispositif est le suivant : en position de fonctionnement normal, représenté sur la figure 1, la portion centrale de membrane 14 est en appui sur la collerette 22 de la pièce d'extrémité 20, la partie axiale 11 de fil fusible étant sous faible tension mécanique. Lorsqu'il se produit des claquages partiels autocicatrisants de l'élément 1 à enroulement cylindrique, des dégagements gazeux interviennent par décomposition des matières constituant l'élément 1 au voisinage de la zone de claquage ; les gaz produits tendent à augmenter la pression dans le compartiment formé par l'élément 1, et à repousser la membrane 14 en direction de la seconde membrane 17, comprimant l'air contenu dans le compartiment 18. Le déplacement de la membrane 14 s'effectue à l'encontre de l'effort de retenue exercé par la partie axiale 11 de fil fusible. Lorsque la pression des gaz devient suffisante et dépasse un seuil déterminé, la force de traction exercée sur la partie axiale 11 de fil fusible produit sa rupture, et le dispositif passe dans un état tel que représenté sur la figure 2. Dans cet état, la partie axiale 11 s'est brisée, et le diélectrique pâteux 25 sépare les deux extrémités de fil fusible, évitant l'apparition d'un réamorçage par arc électrique entre ces deux extrémités.

Selon un mode de réalisation perfectionné, on prévoit, sur la face latérale externe 6 de l'élément 1 à enroulement cylindrique, des passages privilégiés pour les gaz produits par les claquages partiels. Ces passages sont réalisés en déposant, sur au moins certaines zones de la face latérale 6, une couche 26 de diélectrique pâteux tel que le diélectrique 25. Dans les zones dans lesquelles a été déposé le diélectrique pâteux, la résine 24 ne vient pas au contact de la face latérale périphérique 6 de l'élément 1, et définit les zones de passage privilégié des gaz. Les gaz produits sont alors conduits jusqu'à l'espace occupé entre la membrane 24 et l'élément 1. On prévoit, en particulier, de déposer le diélectrique pâteux sur les portions d'élément 1 en regard des parois de résine les plus fragiles.

Le fil fusible 9 est constitué d'un fil d'alliage de cuivre et d'argent de faible section. Ce fil peut aussi assurer une fonction de fusible en cas de fort courant.

La présente invention n'est pas limitée aux modes de réalisation qui ont été explicitement décrits, mais elle en inclut les diverses variantes et généralisations contenues dans le domaine des revendications ci-après.

## Revendications

1. Condensateur basse tension de puissance auto-protégé,
- comprenant au moins un élément (1) à enroulement cylindrique de couches isolantes et de couches conductrices de l'électricité formant une première et une seconde électrodes de type auto-cicatrisant isolées l'une de l'autre,
- la première électrode étant connectée électriquement à un premier conducteur d'entrée (2) du condensateur,
- la seconde électrode étant connectée électriquement à un second conducteur d'entrée (3) du condensateur par l'intermédiaire d'un fil fusible (9) susceptible de fondre et d'interrompre la circulation de courant électrique lorsque le condensateur est traversé par une intensité supérieure à un seuil déterminé,
- l'élément (1) à enroulement cylindrique étant inséré dans une enceinte étanche, les conducteurs d'entrée (2, 3) traversant de manière étanche la paroi de l'enceinte,
- une membrane déformable (14) divisant l'espace intérieur de l'enceinte en deux compartiments, un premier compartiment contenant l'élément (1) à enroulement cylindrique d'électrodes, un second compartiment (18) contenant un gaz tel que l'air, la membrane déformable (14) étant susceptible de se déformer sous l'action de la pression de gaz produit par la décomposition d'une portion de l'élément (1) à enroulement cylindrique en cas de claquage auto-cicatrisant,
- la membrane déformable (14) étant reliée mécaniquement à une portion (160) du premier conducteur d'entrée (2) pour provoquer le déplacement de ladite portion (160) du conducteur lors de la déformation de la membrane,
caractérisé en ce que :
- une partie cassable (11) de premier conducteur d'entrée (2) est tendue entre un point fixe (12) disposé à l'intérieur du premier compartiment (1) et la portion (160) de conducteur reliée mécaniquement à la membrane (14) déformable, de sorte que la déformation de membrane produit une tension de la partie cassable (11) de conducteur d'entrée, ladite partie cassable présentant une résistance mécanique limitée telle qu'elle se rompt sous l'action d'une tension supérieure à un seuil de traction déterminé,
- la partie cassable (11) de conducteur d'entrée est noyée dans un diélectrique pâteux (25) évitant le réamorçage électrique après rupture de la partie cassable (11).

2. Condensateur selon la revendication 1, caractérisé en ce que la partie cassable (11) de conducteur d'entrée est constituée d'un fil fusible (9) de diamètre choisi pour présenter la résistance mécanique limitée appropriée.

3. Condensateur selon la revendication 2, caractérisé en ce que le conducteur d'entrée comprend une seconde portion constituée de fil fusible (10), également noyée dans un diélectrique pâteux (25).

4. Condensateur selon l'une quelconque des revendications 1 à 3, caractérisé en ce que :
- l'élément (1) à enroulement cylindrique comporte un canal axial traversant (7) traversé par le premier conducteur d'entrée (2), le premier conducteur d'entrée (2) comprenant un conducteur de forte section (13) axial dont l'extrémité (12) occupe une position intermédiaire dans le canal axial et forme le point fixe auquel est solidarisée une première extrémité de la partie cassable (11) de conducteur d'entrée,
- la membrane déformable (14) recouvre l'une des faces d'extrémité (4) de l'élément à enroulement cylindrique (1),
- la partie cassable (11) de conducteur d'entrée est solidarisée par sa seconde extrémité à la zone centrale de membrane déformable (14),
- un diélectrique pâteux (25) est disposé dans la portion de canal axial contenant la partie cassable de conducteur d'entrée (11) et dans la zone située entre la face d'extrémité (4) de l'élément à enroulement cylindrique (1) et la membrane déformable (14).

5. Condensateur selon la revendication 4, caractérisé en ce que la membrane déformable (14) est associée à une seconde membrane (17) formant avec elle une capsule étanche (14-18) remplie d'un gaz tel que l'air, l'épaisseur de la capsule (14-18) étant suffisante pour autoriser une déformation de membrane déformable (14) telle qu'elle assure la rupture de la partie cassable (11) de conducteur d'entrée.

6. Condensateur selon la revendication 5, caractérisé en ce que la capsule (14, 17) comporte un rebord (15) pour recouvrir partiellement la face latérale (6) de l'élément (1) à enroulement cylindrique.

7. Condensateur selon l'une des revendications 5 ou 6, caractérisé en ce que l'ensemble capsule (14, 18)-élément (1) à enroulement cylindrique est noyé dans une résine diélectrique (24) formant la paroi de l'enceinte, le diélectrique pâteux (25) empêchant la pénétration de résine entre la membrane (14) déformable et l'élément (1) à enroulement cylindrique.

8. Condensateur selon la revendication 7, caractérisé en ce qu'une pellicule (26) de diélectrique pâteux est disposée entre la face latérale (6) de l'élément (1) à enroulement cylindrique et la résine (24), pour former des zones de cheminement préférentiel des gaz.

9. Condensateur selon l'une quelconque des revendications 1 à 8, caractérisé en ce que le diélectrique pâteux (25) est une graisse au silicone.

10. Condensateur selon l'une quelconque des revendications 1 à 9, caractérisé en ce que :
- la première électrode est relié au premier conducteur (2) par une première soudure (8) disposée en zone périphérique de la première face d'extrémité (4) de l'élément (1) à enroulement cylindrique et connectée au fil fusible (9),
- le fil fusible (9) comporte une partie radiale (10) reliant ladite première soudure (8) et la zone centrale de membrane déformable (14) à laquelle il est solidarisé par soudure (16),
- la seconde électrode est reliée au second conducteur (3) par une seconde soudure (23) disposée sur la seconde face d'extrémité (5) de l'élément (1) à enroulement cylindrique.

## Patentansprüche

1. Niederspannungs-Leistungskondensator mit Eigenschutz, der
- mindestens eine Rundwickeleinheit (1) mit Isolierstoffschichten und elektrisch leitenden Schichten umfaßt, die eine erste und eine zweite Elektrode mit Selbstheilung sowie gegenseitiger Isolierung bilden, wobei
- die erste Elektrode elektrisch mit einem ersten Eingangsleiter (2) des Kondensators verbunden ist,
- die zweite Elektrode über einen Schmelzdraht (9) elektrisch mit einem zweiten Eingangsleiter (3) des Kondensators verbunden ist, der dazu dient, abzuschmelzen und den Stromfluß zu unterbrechen, wenn der Strom im Kondensator einen bestimmten Grenzwert überschreitet,
- die Rundwickeleinheit (1) in einen gasdichten Behälter eingesetzt ist und die Eingangsleiter (2, 3) gasdicht durch die Behälterwand geführt sind,
- eine verformbare Membran (14) den Innenraum des Behälters in zwei Abteile unterteilt, und zwar ein erstes Abteil, in dem die Rundwickeleinheit (1) mit den Elektroden angeordnet ist, und ein zweites Abteil (18), welches ein Gas wie beispielsweise Luft enthält, wobei sich die verformbare Membran (14) unter dem Druck der Gase verformen kann, die durch die Zersetzung eines Teils der Rundwickeleinheit (1) beim Auftreten eines selbstheilenden Durchschlags erzeugt werden,
- die verformbare Membran (14) mechanisch mit einem Abschnitt (160) des ersten Eingangsleiters (2) verbunden ist, um bei Verformung der Membran eine Verschiebung des genannten Leiterabschnitts (160) zu bewirken,
dadurch gekennzeichnet, daß
- ein aufbrechbarer Abschnitt (11) des ersten Eingangsleiters (2) zwischen einem, im Innern des ersten Abteils (1) angeordneten ortsfesten Punkt (12) und dem mechanisch mit der verformbaren Membran (14) verbundenen Leiterabschnitt (160) gespannt ist, derart daß die Verformung der Membran eine Spannung im aufbrechbaren Abschnitt (11) des Eingangsleiters verursacht, wobei der genannte aufbrechbare Abschnitt eine begrenzte mechanische Festigkeit aufweist, die seinen Bruch bewirkt, wenn die Spannung einen bestimmten Grenzwert der Zugfestigkeit überschreitet, und
- der ausbrechbare Abschnitt (11) des Eingangsleiters vollständig von einem pastenförmigen Dielektrikum (25) umgeben ist, das nach dem Bruch des aufbrechbaren Abschnitts (11) eine Neuzündung verhindert.

2. Kondensator nach Anspruch 1, dadurch gekennzeichnet, daß der aufbrechbare Abschnitt (11) des Eingangsleiters als Schmelzdraht (9) ausgeführt ist, dessen Durchmesser sich nach dem jeweils geeigneten Grenzwert der mechanischen Festigkeit richtet.

3. Kondensator nach Anspruch 2, dadurch gekennzeichnet, daß der Eingangsleiter einen zweiten Schmelzdrahtabschnitt (10) umfaßt, der ebenfalls von einem pastenförmigen Dielektrikum (25) umgeben ist.

4. Kondensator nach irgendeinem der Ansprüche 1 bis 3, dadurch gekennzeichnet, daß
- die Rundwickeleinheit (1) einen, vom ersten Eingangsleiter (2) durchquerten axialen Durchgangskanal (7) aufweist, wobei der erste Eingangsleiter (2) einen Axialleiter (13) mit großem Querschnitt umfaßt, dessen Ende (12) im Innern des Axialkanals in einer Zwischenstellung angeordnet ist und den ortsfesten Punkt bildet, an dem ein erstes Ende des aufbrechbaren Abschnitts (11) des Eingangsleiters befestigt ist,
- die verformbare Membran (14) eine der Stirnseiten (4) der Rundwickeleinheit (1) überdeckt,
- der aufbrechbare Abschnitt (11) des Eingangsleiters über sein zweites Ende mit dem Mittelteil der verformbaren Membran (14) verbunden ist,
- ein pastenförmiges Dielektrikum (25) in den, den aufbrechbaren Abschnitt (11) des Eingangsleiters enthaltenden Bereich des Axialkanals sowie in den zwischen der Stirnseite (4) der Rundwickeleinheit (1) und der verformbaren Membran (14) ausgebildeten Raum eingebracht ist.

5. Kondensator nach Anspruch 4, dadurch gekennzeichnet, daß die verformbare Membran (14) einer zweiten Membran (17) zugeordnet ist, die zusammcn mit der ersten eine gasdichte, mit einem Gas wie beispielsweise Luft gefüllte Kapsel (14-18) bildet, wobei die Dicke der Kapsel (14-18) so gewählt ist, daß sie ausreicht, die verformbare Membran (14) so stark zu verformen, daß ein Bruch des aufbrechbaren Abschnitts (11) des Eingangsleiters gewährleistet ist.

6. Kondensator nach Anspruch 5, dadurch gekennzeichnet, daß die Kapsel (14, 17) einen Kragen (15) zur teilweisen Überdeckung der Seitenfläche (6) der Rundwickeleinheit (1) umfaßt.

7. Kondensator nach einem der Ansprüche 5 oder 6, dadurch gekennzeichnet, daß die aus Kapsel (14, 18) und Rundwickeleinheit (1) bestehende Anordnung von einem die Behälterwand bildenden dielektrischen Harz (24) umgeben ist, wobei das pastenförmige Dielektrikum (25) das Eindringen von Harz in den Raum zwischen der verformbaren Membran (14) und der Rundwickeleinheit (1) verhindert.

8. Kondensator nach Anspruch 7, dadurch gekennzeichnet, daß zwischen die Seitenfläche (6) der Rundwickeleinheit (1) und das Harz (24) eine dünne Schicht (26) eines pastenförmiges Dielektrikums eingebracht wird, um Vorzugsströmungswege für die Gase zu bilden.

9. Kondensator nach irgendeinem der Ansprüche 1 bis 8, dadurch gekennzeichnet, daß es sich bei dem pastenförmigen Dielektrikum (25) um ein Silikonfett handelt.

10. Kondensator nach irgendeinem der Ansprüche 1 bis 9, dadurch gekennzeichnet, daß
- die erste Elektrode über eine am äußeren Rand der ersten Stirnseite (4) der Rundwickeleinheit (1) angeordnete und mit dem Schmelzdraht (9) verbundene erste Lötstelle (8) mit dem ersten Leiter (2) verbunden ist,
- der Schmelzdraht (9) einen Radialabschnitt (10) umfaßt, der die genannte erste Lötstelle (8) mit dem Mittelteil der verformbaren Membran (14) verbindet, an den der Schmelzdraht angelötet ist (16),
- die zweite Elektrode über eine an der zweiten Stirnseite (5) der Rundwickeleinheit (1) angeordnete zweite Lötstelle (23) mit dem zweiten Leiter (3) verbunden ist.

## Claims

1. A self-protected low-voltage power capacitor,
- comprising at least one element (1) with cylindrical winding of insulating layers and electricity conducting layers forming a first and second electrode of self-healing type insulated from one another,
- the first electrode being electrically connected to a first input conductor (2) of the capacitor,
- the second electrode being electrically connected to a second input conductor (3) of the capacitor by means of a fuse wire (9) designed to melt and interrupt the electrical current flow when the capacitor has flowing through it a current greater than a set threshold,
- the cylindrically wound element (1) being inserted in a sealed enclosure, the input conductors (2, 3) passing tightly through the wall of the enclosure,
- a deformable membrane (14) dividing the internal space of the enclosure into two compartments, a first compartment containing the element (1) with cylindrical winding of electrodes, a second compartment (18) containing a gas such as air, the deformable membrane (14) being able to be deformed by the gas pressure produced by decomposition of a portion of the cylindrically wound element (1) in the event of a self-healing breakdown,
- the deformable membrane (14) being mechanically connected to a portion (160) of the first input conductor (2) to bring about movement of said portion (160) of the conductor when deformation of the membrane takes place,
characterized in that
- a breakable part (11) of the first input conductor (2) is drawn taut between a fixed point (12) located inside the first compartment (1) and the portion (160) of conductor mechanically connected to the deformable membrane (14), in such a way that deformation of the membrane produces a traction of the breakable part (11) of the input conductor, said breakable part presenting a limited mechanical strength such that it breaks due to the action of a traction force greater than a set traction threshold,
- the breakable part (11) of the input conductor is sunk in a pasty dielectric (25) preventing electrical restriking after breaking of the breakable part (11) has taken place.

2. The capacitor according to claim 1, characterized in that the breakable part (11) of the input conductor is formed by a fuse wire (9) of a diameter chosen to present the appropriate limited mechanical strength.

3. The capacitor according to claim 2, characterized in that the input conductor comprises a second portion formed by fuse wire (10), also sunk in a pasty dielectric (25).

4. The capacitor according to any one of the claims 1 to 3, characterized in that:
- the cylindrically wound element (1) comprises an axial channel (7) through which the first input conductor (2) passes, the first input conductor (2) comprising an axial conductor of large cross section (13) whose end (12) occupies an intermediate position in the axial channel and forms the fixed point to which a first end of the breakable part (11) of the input conductor is secured,
- the deformable membrane (14) covers one of the end faces (4) of the cylindrically wound element (1),
- the breakable part (11) of the input conductor is secured via its second end to the central zone of the deformable membrane (14),
- a pasty dielectric (25) is disposed in the portion of axial channel containing the breakable part of input conductor (11) and in the zone situated between the end face (4) of the cylindrically wound element (1) and the deformable membrane (14).

5. The capacitor according to claim 4, characterized in that the deformable membrane (14) is associated to a second membrane (17) forming therewith a tightly sealed capsule (14-18) filled with a gas such as air, the thickness of the capsule (14-18) being sufficient to allow deformation of the deformable membrane (14) such that it ensures breaking of the breakable part (11) of the input conductor.

6. The capacitor according to claim 5, characterized in that the capsule (14, 17) comprises an edge (15) to partially receive the side face (6) of the cylindrically wound element (1).

7. The capacitor according to either one of the claims 5 or 6, characterized in that the assembly formed by the capsule (14, 18) and the cylindrically wound element (1) is sunk in a dielectric resin (24) forming the wall of the enclosure, the pasty dielectric (25) preventing the resin from penetrating between the deformable membrane (14) and the cylindrically wound element (1).

8. The capacitor according to claim 7, characterized in that a film of pasty dielectric (25) is disposed between the side face (6) of the cylindrically wound element (1) and the resin (24) to form preferential routing zones of the gases.

9. The capacitor according to any one of the claims 1 to 8, characterized in that the pasty dielectric (25) is a silicone grease.

10. The capacitor according to any one of the claims 1 to 9, characterized in that :
the first electrode is connected to the first conductor (2) by a first welding (8) located in the peripheral zone of the first end face (4) of the cylindrically wound element (1) and connected to the fuse wire (9),
the fuse wire (9) comprises a radial part (10) connecting said first welding (8) and the central zone of the deformable membrane (14) to which it is secured by welding (16),
the second electrode is connected to the second conductor (3) by a second welding (23) disposed on the second end face (5) of the cylindrically wound element (1).
